# EUROPÄISCHE PATENTANMELDUNG

(11) **EP 1 288 557 A2**
(43) Veröffentlichungstag der Anmeldung: **05.03.2003**
(21) Anmeldenummer: 02018444.6
(22) Anmeldetag: 16.08.2002
(51) Int. Cl.: F16L 39/04

(54) **Vorrichtung zur Verteilung von Flüssigkeiten**

(30) Priorität: 01.09.2001 DE 10142988
(71) Anmelder: SIG Corpoplast GmbH & Co. KG, 22145 Hamburg (DE)
(72) Erfinder: Linke, Michael, 22926 Ahrensburg (DE); Litzenberg, Michael, 21502 Geesthacht (DE)
(74) Vertreter: Klickow, Hans-Henning

(57) **Zusammenfassung**

Die Vorrichtung dient zur Verteilung von Flüssigkeiten und weist einen von einer Trageinrichtung (41) gehalterten Sockel (42) mit Sockelfuß (44) sowie mindestens eine relativ zum Sockel (42) drehbeweglich gelagerte erste Verteileinrichtung (43) auf. Eine zweite Verteileinrichtung ist relativ zu einem starr mit der Trageinrichtung (41) verbundenen Grundelement rotationsfähig gelagert. Die zweite Verteileinrichtung (84) ist mechanisch mit der erste Verteileinrichtung (43) gekoppelt. Die zweite Verteileinrichtung (84) umgibt den Sockelfuß (44) außenseitig mindestens bereichsweise und im wesentlichen koaxial.

## Beschreibung

Die Erfindung betrifft eine Vorrichtung zur Verteilung von Flüssigkeiten, die einen von einer Trageinrichtung gehalterten Sockel mit Sockelfuß und mindestens eine relativ zum Sockel drehbeweglich gelagerte erste Verteileinrichtung aufweist.

Derartige Vorrichtungen werden insbesondere bei der Herstellung von blasgeformten Behältern eingesetzt, um eine mit der Durchführung des Blasvorganges koordinierte Zuleitung eines oder mehrerer Flüssigkeiten durchführen zu können. Beispielsweise ist es möglich, derartige Verteiler im Bereich eines rotierenden Blasrades zu installieren und hierüber auf dem Blasrad installierten Blasstationen eines oder mehrere Temperiermedien, beispielsweise Wasser oder Öl, zuzuführen.

Bei einer derartigen Behälterformung durch Blasdruckeinwirkung werden Vorformlinge aus einem thermoplastischen Material, beispielsweise Vorformlinge aus PET (Polyethylenterephthalat), innerhalb einer Blasmaschine unterschiedlichen Bearbeitungsstationen zugeführt. Typischerweise weist eine derartige Blasmaschine eine Heizeinrichtung sowie eine Blaseinrichtung auf, in deren Bereich der zuvor temperierte Vorformling durch biaxiale Orientierung zu einem Behälter expandiert wird. Die Expansion erfolgt mit Hilfe von Druckluft, die in den zu expandierenden Vorformling eingeleitet wird. Der verfahrenstechnische Ablauf bei einer derartigen Expansion des Vorformlings wird in der DE-OS 43 40 291 erläutert.

Der grundsätzliche Aufbau einer Blasstation zur Behälterformung wird in der DE-OS 42 12 583 beschrieben. Möglichkeiten zur Temperierung der Vorformlinge werden in der DE-OS 23 52 926 erläutert.

Innerhalb der Vorrichtung zur Blasformung können die Vorformlinge sowie die geblasenen Behälter mit Hilfe unterschiedlicher Handhabungseinrichtungen transportiert werden. Bewährt hat sich insbesondere die Verwendung von Transportdornen, auf die die Vorformlinge aufgesteckt werden. Die Vorformlinge können aber auch mit anderen Trageinrichtungen gehandhabt werden. Die Verwendung von Greifzangen zur Handhabung von Vorformlingen und die Verwendung von Spreizdornen, die zur Halterung in einen Mündungsbereich des Vorformlings einführbar sind, gehören ebenfalls zu den verfügbaren Konstruktionen.

Die bereits erläuterte Handhabung der Vorformlinge erfolgt zum einen bei den sogenannten Zweistufenverfahren, bei denen die Vorformlinge zunächst in einem Spritzgußverfahren hergestellt, anschließend zwischengelagert und erst später hinsichtlich ihrer Temperatur konditioniert und zu einem Behälter aufgeblasen werden. Zum anderen erfolgt eine Anwendung bei den sogenannten Einstufenverfahren, bei denen die Vorformlinge unmittelbar nach ihrer spritzgußtechnischen Herstellung und einer ausreichenden Verfestigung geeignet temperiert und anschließend aufgeblasen werden.

Im Hinblick auf die verwendeten Blasstationen sind unterschiedliche Ausführungsformen bekannt. Bei Blasstationen, die auf rotierenden Transporträdern angeordnet sind, ist eine buchartige Aufklappbarkeit der Formträger häufig anzutreffen. Es ist aber auch möglich, relativ zueinander verschiebliche oder andersartig geführte Formträger einzusetzen. Bei ortsfesten Blasstationen, die insbesondere dafür geeignet sind, mehrere Kavitäten zur Behälterformung aufzunehmen, werden typischerweise parallel zueinander angeordnete Platten als Formträger verwendet.

Relativ häufig werden die im Bereich von rotierenden Blasrädern eingesetzten Vorrichtungen zur Verteilung von Flüssigkeiten in ein sogenanntes Zweikreissystem integriert, bei dem den Blasstationen Temperiermedien mit zwei unterschiedlichen Temperaturen zugeführt werden. Die Verteiler sind hierbei säulenartig konstruiert und die Zuführung sowie die Ableitung der Flüssigkeiten zu ortsfest im Bereich der Trageinrichtung angeordneten Anschlüssen erfolgt durch den Sockel der Verteilvorrichtung hindurch.

Bei derartigen Zweikreis-Systemen besteht die relativ zum Sockel drehbewegliche Verteileinrichtung aus einem rohrartigen Element, das gemeinsam mit dem Sockel eine geeignete Anzahl von Kammern für die zu verteilenden Flüssigkeiten begrenzt und das außenseitig mit einer erforderlichen Anzahl von Anschlüssen versehen ist, um eine Verbindung zu den Blasstationen herzustellen. Ein typischer Aufbau erfolgt derart, daß ein Lager für die Verteileinrichtung im Bereich eines Sockelfußes angeordnet ist und daß in lotrechter Richtung oberhalb des Sockelfußes zunächst die Anschlüsse für den ersten Verteilerkreis und in lotrechter Richtung über diesen Anschlüssen die Anschlüsse über den zweiten Verteilerkreis positioniert sind.

Grundsätzlich kann eine derartige Vorrichtung durch in axialer Richtung aufeinanderfolgende Anordnung weiterer Verteileinrichtungen auf nahezu beliebig viele weitere separate Flüssigkeitskreise erweitert werden, es erfolgt hierdurch jedoch eine erhebliche Vergrößerung der Bauhöhe, darüber hinaus muß auch der Durchmesser der Vorrichtung vergrößert werden, um für die erforderliche Anzahl von Strömungskanälen ausreichende Strömungsquerschnitte bereitzustellen, die einen möglichst geringen Strömungswiderstand verursachen.

Aufgabe der vorliegenden Erfindung ist es daher, eine Vorrichtung der einleitend genannten Art derart zu konstruieren, daß eine erforderliche Anzahl von Flüssigkeitskreisen bei einem kompakten Aufbau bereitgestellt werden kann.

Diese Aufgabe wird erfindungsgemäß dadurch gelöst, daß eine zweite Verteileinrichtung relativ zu einem starr mit der Trageinrichtung verbundenen Grundelement rotationsfähig gelagert ist, daß die zweite Verteileinrichtung mechanisch mit der ersten Verteileinrichtung gekoppelt ist und daß die zweite Verteileinrichtung den Sockelfuß mindestens bereichsweise im wesentlichen koaxial außenseitig umgibt.

Durch die Anordnung der zweiten Verteileinrichtung außenseitig zum Sockelfuß ist es möglich, die ansonsten ungenutzte Bauhöhe des Sockelfußes für die Installation einer zusätzlichen Verteileinrichtung zu nutzen, mit deren Hilfe mindestens ein weiterer Flüssigkeitskreis bereitgestellt werden kann. Durch die mechanische Kopplung der zweiten Verteileinrichtung mit der ersten Verteileinrichtung wird eine exakt definierte Bewegungskopplung bereitgestellt und die koaxiale Anordnung unterstützt eine einfache mechanische Arbeitsweise sowie eine zuverlässige Abdichtung.

Durch die Anordnung mindestens des beweglichen Teiles der Verteileinrichtung außenseitig zum Sockelfuß ist es insbesondere möglich, den ansonsten ungenutzten Abstandsbereich zwischen der ersten Verteileinrichtung und der den Sockelfuß halternden Trageinrichtung konstruktiv für die Anordnung der zweiten Verteileinrichtung zu nutzen. Typischerweise ist in einem derartigen Bereich gemäß dem Stand der Technik ein relativ massiv ausgebildeter Verteilersockel angeordnet, der relativ zum Sockelfuß rotiert und dessen Funktion lediglich darin besteht, eine mechanische Basis für den rotierenden Teil der ersten Verteileinrichtung bereitzustellen. Im Hinblick auf die unmittelbare Verteilerfunktion sind in diesem Bereich jedoch keinerlei Anschlüsse verwendet. Gemäß der vorgeschlagenen Anordnung der zweiten Verteileinrichtung wird somit die funktionelle Kompaktheit der Vorrichtung wesentlich erhöht.

Eine mechanisch kompakte Konstruktion wird dadurch unterstützt, daß das Grundelement über eine Grundplatte mit dem Sockelfuß verbunden ist.

Zur Ermöglichung einer einfachen Leitungsführung ist vorgesehen, daß sich innerhalb des Grundelementes Verbindungskanäle für die zu verteilende Flüssigkeit in Richtung einer Verteilerlängsachse erstrecken.

Ein Anschluß einer Vielzahl von Vorläufen und Rückläufen für die zu verteilende Flüssigkeit wird dadurch unterstützt, daß sich im Bereich der zweiten Verteileinrichtung angeordnete Anschlüsse für die zu verteilende Flüssigkeit relativ zur Verteilerlängsachse in einer radialen Richtung erstrecken.

Ebenfalls wird eine kompakte Konstruktion dadurch unterstützt, daß sich im Bereich der ersten Verteileinrichtung angeordnete Verbindungskanäle in Richtung der Verteilerlängsachse erstrecken.

Eine Versorgung einer Vielzahl von Verbrauchern kann auch dadurch realisiert werden, daß sich im Bereich der ersten Verteileinrichtung angeordnete Anschlüsse relativ zur Verteilerlängsachse im wesentlichen in einer radialen Richtung erstrecken.

Eine typische Anwendung wird dadurch definiert, daß die erste Verteileinrichtung zur Verteilung eines heißen Mediums ausgebildet ist.

Insbesondere ist daran gedacht, daß die erste Verteileinrichtung zur Verteilung eines heißen Öles ausgebildet ist.

Eine optimale Strukturierung von Temperaturzonen bei der Verteilung von Flüssigkeiten mit unterschiedlichen Temperaturen wird dadurch erreicht, daß die zweite Verteileinrichtung zur Verteilung eines kalten Mediums ausgebildet ist.

Insbesondere ist daran gedacht, daß die zweite Verteileinrichtung zur Verteilung von kaltem Wasser ausgebildet ist.

Eine typische Anwendung wird dadurch definiert, daß die erste Verteileinrichtung als ein Zwei-Kreis-Verteiler ausgebildet ist.

Ein modulares System, das bedarfsabhängig bei im wesentlichen übereinstimmenden Baugruppen um einen zusätzlichen Verteilerkreis ergänzt werden kann, wird dadurch bereitgestellt, daß die erste Verteileinrichtung gemeinsam mit der zweiten Verteileinrichtung einen Drei-Kreis-Verteiler bereitstellt.

Eine sehr kompakte Konstruktion wird auch dadurch bereitgestellt, daß zwischen dem Sockelfuß und dem Grundelement ein Verteilersockel der ersten Verteileinrichtung angeordnet ist.

Zur Unterstützung einer preiswerten Herstellung durch geometrisch einfache Einzelteile trägt es bei, daß das Grundelement im Bereich seiner der Verteilerlängsachse abgewandten Ausdehnung mit einem Kammerträger versehen ist.

Eine Lagerung und Abstützung der zweiten Verteileinrichtung kann beispielsweise dadurch erfolgen, daß der Kammerträger als Dichtflächenträger für Gleitringdichtungen der zweiten Verteileinrichtung ausgebildet ist.

Eine bevorzugte Anwendung besteht darin, daß die erste Verteileinrichtung und die zweite Verteileinrichtung im Bereich eines rotierenden Blasrades angeordnet sind.

Eine Temperierung der für die Blasverformung eingesetzten Formen kann dadurch erfolgen, daß die Anschlüsse der Verteileinrichtungen mit Blasstationen verbunden sind, die im Bereich des rotierenden Blasrades angeordnet sind.

Die Verwendung eines Drei-Kreis-Verteilers erweist sich insbesondere bei der Durchführung eines Verfahrens zur Herstellung von Behältern als vorteilhaft, das im wesentlichen dadurch charakterisiert ist, daß die Blasstationen zur Herstellung von Behältern mit einer Konturstabilität bei einer Einwirkung einer Temperatur von mindestens 70° C ausgebildet sind.

Eine weitere Verbesserung der Kompaktheit kann dadurch erreicht werden, daß das Grundelement und der Sockelfuß ein gemeinsames Bauteil ausbilden.

Zu einer einfachen Herstellung trägt es bei, daß die Verbindungskanäle des Grundelementes innerhalb des Sockelfußes angeordnet sind.

Eine optimale Raumausnutzung wird dadurch unterstützt, daß das Lager der ersten Verteileinrichtung in Richtung der Verteilerlängsachse zwischen der ersten Verteileinrichtung und der zweiten Verteileinrichtung angeordnet ist.

Eine weiter verbesserte Handhabung kann dadurch erreicht werden, daß die erste Verteileinrichtung und die zweite Verteileinrichtung im wesentlichen gleich dimensionierte Außendurchmesser aufweisen.

Eine verbesserte mechanische Stabilität kann dadurch erreicht werden, daß die Grundplatte einen Anschlußflansch aufweist, der sich in eine der zweiten Verteileinrichtung abgewandte Richtung erstreckt.

Zur Erleichterung einer Durchführung der erforderlichen Anschlußarbeiten bei einer Montage der Vorrichtung wird vorgeschlagen, daß der Anschlußflansch Versorgungsanschlüsse trägt, die in die Verbindungskanäle einmünden.

In den Zeichnungen sind Ausführungsbeispiele der Erfindung schematisch dargestellt. Es zeigen:
- Fig. 1: Eine perspektivische Darstellung einer Blasstation zur Herstellung von Behältern aus Vorformlingen,
- Fig. 2: einen Längsschnitt durch eine Blasform, in der ein Vorformling gereckt und expandiert wird,
- Fig. 3: eine Skizze zur Veranschaulichung eines grundsätzlichen Aufbaus einer Vorrichtung zur Blasformung von Behältern,
- Fig. 4: eine modifizierte Heizstrecke mit vergrößerter Heizkapazität,
- Fig. 5: einen Querschnitt durch die Vorrichtung vor eine Installation der zusätzlichen Verteileinrichtung außenseitig zum Sockelfuß,
- Fig. 6: eine teilweise Darstellung einer Seitenansicht einer Vorrichtung ähnlich zu Fig. 5 mit einem schematisch eingezeichneten Installationsraum für die zusätzliche Verteileinrichtung und das zugeordnete Grundelement,
- Fig. 7: eine schematische Darstellung eines Querschnittes durch die außenseitig zum Sockelfuß angeordnete zusätzliche Verteileinrichtung sowie durch das hierzu korrespondierende Grundelement
und
- Fig. 8: eine schematische Darstellung eines Querschnittes durch eine bereichsweise außenseitig zum Sockelfuß angeordnete zusätzliche Verteileinrichtung, bei der das korrespondierende Grundelement in den Sockelfuß integriert ist und die außenseitig einen im wesentlichen gleichen Durchmesser wie die erste Verteileinrichtung aufweist.

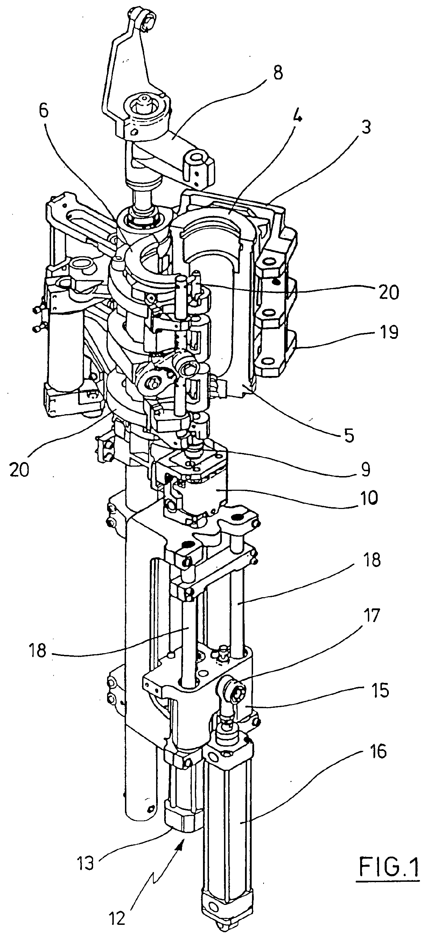

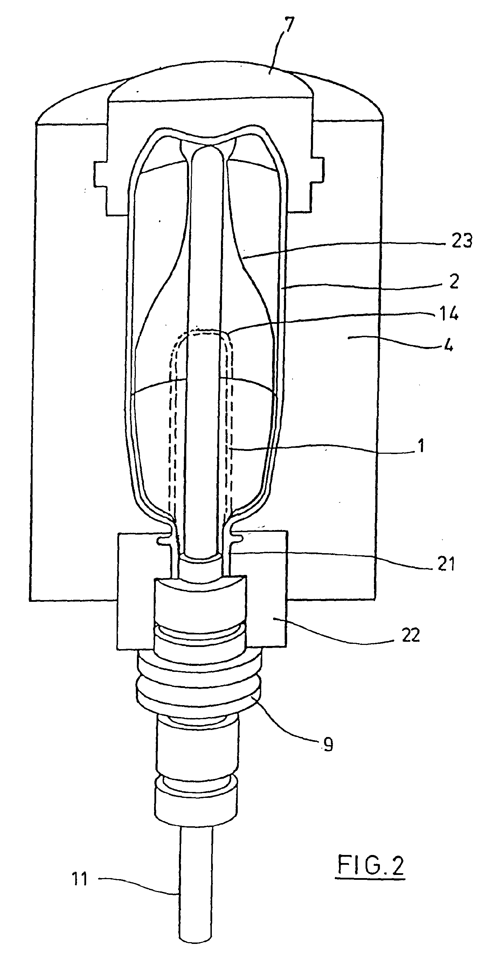

Eine Verwendung der Vorrichtung zur Verteilung von Flüssigkeiten kann beispielsweise zur Verteilung eines oder mehrerer Temperiermedien bei einer Vorrichtung zur Blasformung erfolgen. Der prinzipielle Aufbau einer Vorrichtung zur Umformung von Vorformlingen (1) in Behälter (2) ist in Fig. 1 und in Fig. 2 dargestellt.

Die Vorrichtung zur Formung des Behälters (2) besteht im wesentlichen aus einer Blasstation (3), die mit einer Blasform (4) versehen ist, in die ein Vorformling (1) einsetzbar ist. Der Vorformling (1) kann ein spritzgegossenes Teil aus Polyethylenterephthalat sein. Zur Ermöglichung eines Einsetzens des Vorformlings (1) in die Blasform (4) und zur Ermöglichung eines Herausnehmens des fertigen Behälters (2) besteht die Blasform (4) aus Formhälften (5, 6) und einem Bodenteil (7), das von einer Hubvorrichtung (8) positionierbar ist. Der Vorformling (1) kann im Bereich der Blasstation (3) von einem Transportdorn (9) gehalten sein, der gemeinsam mit dem Vorformling (1) eine Mehrzahl von Behandlungsstationen innerhalb der Vorrichtung durchläuft. Es ist aber auch möglich, den Vorformling (1) beispielsweise über Zangen oder andere Handhabungsmittel direkt in die Blasform (4) einzusetzen.

Zur Ermöglichung einer Druckluftzuleitung ist unterhalb des Transportdornes (9) ein Anschlußkolben (10) angeordnet, der dem Vorformling (1) Druckluft zuführt und gleichzeitig eine Abdichtung relativ zum Transportdorn (9) vornimmt. Bei einer abgewandelten Konstruktion ist es grundsätzlich aber auch denkbar, feste Druckluftzuleitungen zu verwenden.

Eine Reckung des Vorformlings (1) erfolgt mit Hilfe einer Reckstange (11), die von einem Zylinder (12) positioniert wird. Grundsätzlich ist es aber auch denkbar, eine mechanische Positionierung der Reckstange (11) über Kurvensegmente durchzuführen, die von Abgriffrollen beaufschlagt sind. Die Verwendung von Kurvensegmenten ist insbesondere dann zweckmäßig, wenn eine Mehrzahl von Blasstationen (3) auf einem rotierenden Blasrad angeordnet sind. Eine Verwendung von Zylindern (12) ist zweckmäßig, wenn ortsfest angeordnete Blasstationen (3) vorgesehen sind.

Bei der in Fig. 1 dargestellten Ausführungsform ist das Recksystem derart ausgebildet, daß eine Tandem-Anordnung von zwei Zylindern (12) bereitgestellt ist. Von einem Primärzylinder (13) wird die Reckstange (11) zunächst vor Beginn des eigentlichen Reckvorganges bis in den Bereich eines Bodens (14) des Vorformlings (1) gefahren. Während des eigentlichen Reckvorganges wird der Primärzylinder (13) mit ausgefahrener Reckstange gemeinsam mit einem den Primärzylinder (13) tragenden Schlitten (15) von einem Sekundärzylinder (16) oder über eine Kurvensteuerung positioniert. Insbesondere ist daran gedacht, den Sekundärzylinder (16) derart kurvengesteuert einzusetzen, daß von einer Führungsrolle (17), die während der Durchführung des Reckvorganges an einer Kurvenbahn entlang gleitet, eine aktuelle Reckposition vorgegeben wird. Die Führungsrolle (17) wird vom Sekundärzylinder (16) gegen die Führungsbahn gedrückt. Der Schlitten (15) gleitet entlang von zwei Führungselementen (18).

Nach einem Schließen der im Bereich von Trägern (19, 20) angeordneten Formhälften (5, 6) erfolgt eine Verriegelung der Träger (19, 20) relativ zueinander mit Hilfe einer Verriegelungseinrichtung (20).

Zur Anpassung an unterschiedliche Formen eines Mündungsabschnittes (21) des Vorformlings (1) ist gemäß Fig. 2 die Verwendung separater Gewindeeinsätze (22) im Bereich der Blasform (4) vorgesehen.

Fig. 2 zeigt zusätzlich zum geblasenen Behälter (2) auch gestrichelt eingezeichnet den Vorformling (1) und schematisch eine sich entwickelnde Behälterblase (23).

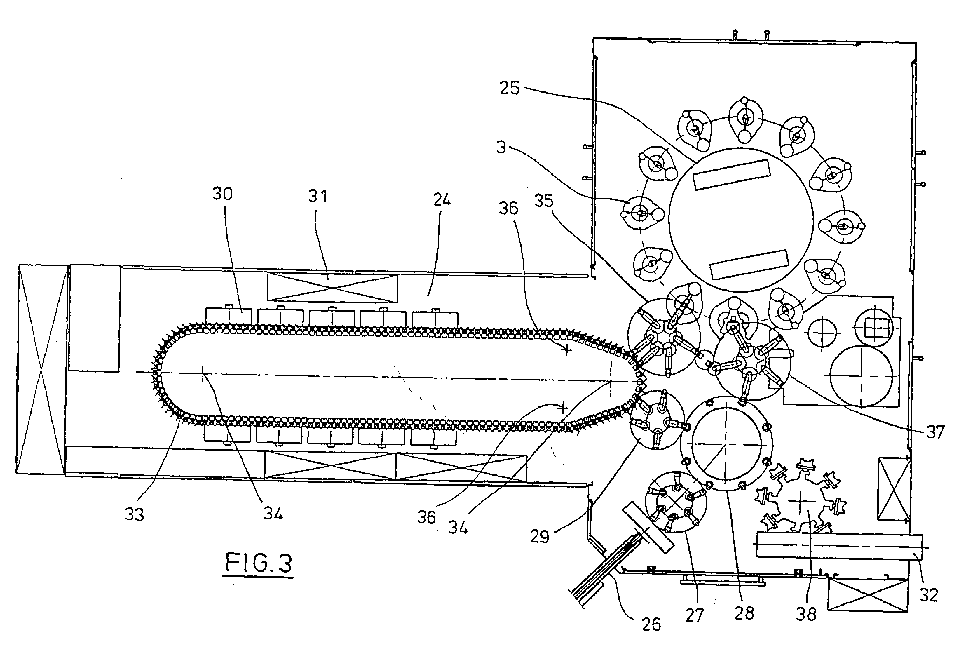

Fig. 3 zeigt den grundsätzlichen Aufbau einer Blasmaschine, die mit einer Heizstrecke (24) sowie einem rotierenden Blasrad (25) versehen ist. Ausgehend von einer Vorformlingseingabe (26) werden die Vorformlinge (1) von Übergaberädern (27, 28, 29) in den Bereich der Heizstrecke (24) transportiert. Entlang der Heizstrecke (24) sind Heizstrahler (30) sowie Gebläse (31) angeordnet, um die Vorformlinge (1) zu temperieren. Nach einer ausreichenden Temperierung der Vorformlinge (1) werden diese an das Blasrad (25) übergeben, in dessen Bereich die Blasstationen (3) angeordnet sind. Die fertig geblasenen Behälter (2) werden von weiteren Übergaberädern einer Ausgabestrecke (32) zugeführt.

Um einen Vorformling (1) derart in einen Behälter (2) umformen zu können, daß der Behälter (2) Materialeigenschaften aufweist, die eine lange Verwendungsfähigkeit von innerhalb des Behälters (2) abgefüllten Lebensmitteln, insbesondere von Getränken, gewährleisten, müssen spezielle Verfahrensschritte bei der Beheizung und Orientierung der Vorformlinge (1) eingehalten werden. Darüber hinaus können vorteilhafte Wirkungen durch Einhaltung spezieller Dimensionierungsvorschriften erzielt werden.

Als thermoplastisches Material können unterschiedliche Kunststoffe verwendet werden. Einsatzfähig sind beispielsweise PET, PEN oder PP.

Die Expansion des Vorformlings (1) während des Orientierungsvorganges erfolgt durch Druckluftzuführung. Die Druckluftzuführung ist in eine Vorblasphase, in der Gas, zum Beispiel Preßluft, mit einem niedrigen Druckniveau zugeführt wird und in eine sich anschließende Hauptblasphase unterteilt, in der Gas mit einem höheren Druckniveau zugeführt wird. Während der Vorblasphase wird typischerweise Druckluft mit einem Druck im Intervall von 10 bar bis 25 bar verwendet und während der Hauptblasphase wird Druckluft mit einem Druck im Intervall von 25 bar bis 40 bar zugeführt.

Aus Fig. 3 ist ebenfalls erkennbar, daß bei der dargestellten Ausführungsform die Heizstrecke (24) aus einer Vielzahl umlaufender Transportelemente (33) ausgebildet ist, die kettenartig aneinandergereiht und entlang von Umlenkrädern (34) geführt sind. Insbesondere ist daran gedacht, durch die kettenartige Anordnung eine im wesentlichen rechteckförmige Grundkontur aufzuspannen. Bei der dargestellten Ausführungsform werden im Bereich der dem Übergaberad (29) und einem Eingaberad (35) zugewandten Ausdehnung der Heizstrecke (24) ein einzelnes relativ groß dimensioniertes Umlenkrad (34) und im Bereich von benachbarten Umlenkungen zwei vergleichsweise kleiner dimensionierte Umlenkräder (36) verwendet. Grundsätzlich sind aber auch beliebige andere Führungen denkbar.

Zur Ermöglichung einer möglichst dichten Anordnung des Übergaberades (29) und des Eingaberades (35) relativ zueinander erweist sich die dargestellte Anordnung als besonders zweckmäßig, da im Bereich der entsprechenden Ausdehnung der Heizstrecke (24) drei Umlenkräder (34, 36) positioniert sind, und zwar jeweils die kleineren Umlenkräder (36) im Bereich der Überleitung zu den linearen Verläufen der Heizstrecke (24) und das größere Umlenkrad (34) im unmittelbaren Übergabebereich zum Übergaberad (29) und zum Eingaberad (35). Alternativ zur Verwendung von kettenartigen Transportelementen (33) ist es beispielsweise auch möglich, ein rotierendes Heizrad zu verwenden.

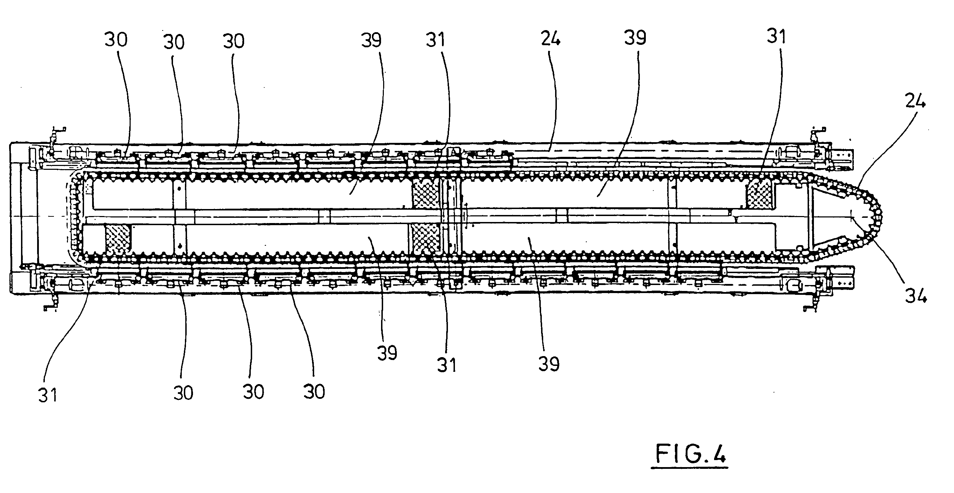

Nach einem fertigen Blasen der Behälter (2) werden diese von einem Entnahmerad (37) aus dem Bereich der Blasstationen (3) herausgeführt und über das Übergaberad (28) und ein Ausgaberad (38) zur Ausgabestrecke (32) transportiert. In der in Fig. 4 dargestellten modifizierten Heizstrecke (24) können durch die größere Anzahl von Heizstrahlern (30) eine größere Menge von Vorformlingen (1) je Zeiteinheit temperiert werden. Die Gebläse (31) leiten hier Kühlluft in den Bereich von Kühlluftkanälen (39) ein, die den zugeordneten Heizstrahlern (30) jeweils gegenüberliegen und über Ausströmöffnungen die Kühlluft abgeben. Durch die Anordnung der Ausströmrichtungen wird eine Strömungsrichtung für die Kühlluft im wesentlichen quer zu einer Transportrichtung der Vorformlinge (1) realisiert. Die Kühlluftkanäle (39) können im Bereich von den Heizstrahlern (30) gegenüberliegenden Oberflächen Reflektoren für die Heizstrahlung bereitstellen, ebenfalls ist es möglich, über die abgegebene Kühlluft auch eine Kühlung der Heizstrahler (30) zu realisieren.

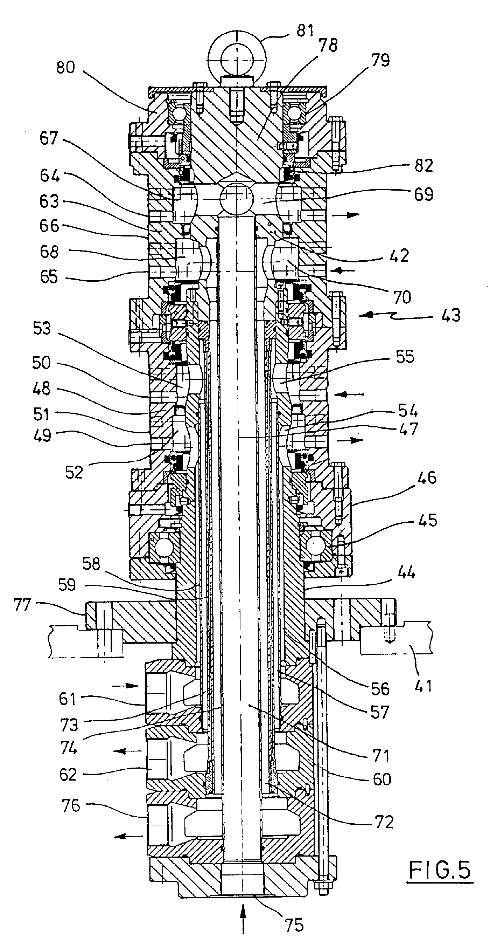

Fig. 5 zeigt einen Vertikalschnitt durch eine Vorrichtung zur Verteilung von Flüssigkeiten, die beispielsweise im Bereich des Blasrades (25) angeordnet werden kann. Die Vorrichtung wird von einer Trageinrichtung (41) gehaltert, die als Teil eines Maschinengestelles für das Blasrad (25) ausgebildet sein kann. Mit der Trageinrichtung (41) ist starr ein Sockel (42) verbunden, der drehbeweglich eine erste Verteileinrichtung (42) haltert. Der Sockel (42) weist im Bereich seiner der Trageinrichtung (41) zugewandten Ausdehnung einen Sockelfuß (44) auf, der über ein Lager (45) einen Verteilersockel (46) der ersten Verteileinrichtung (43) führt.

Das Lager (45) kann als ein Kugellager ausgebildet sein, das koaxial zu einer Verteilerlängsachse (47) positioniert ist.

In Richtung der Verteilerlängsachse (47) schließt sich an den Verteilersockel (46) bei der Ausführungsform gemäß Fig. 5 ein Primärsegment (48) der ersten Verteileinrichtung (43) an, das eine Mehrzahl von Vorlaufanschlüssen (49) sowie Rücklaufanschlüssen (50) aufweist. Die Anschlüsse (49,50) erstrecken sich vorzugsweise relativ zur Verteilerlängsachse (47) in einer radialen Richtung und sind im Bereich eines Außenmantels (51) des Primärsegmentes (48) angeordnet.

Die Anschlüsse (49,50) münden jeweils in Verteilerringkammern (52,53) ein, die radial zu Sockelringkammern (54,55) angeordnet sind. Die Sockelringkammern (54,55) münden in Verbindungskanäle (56,57) des Sockels (42) ein, die beispielsweise durch rohrförmige Wandungen (58,59) und den Sockelfuß (44) begrenzt sein können. Die Verbindungskanäle (56,57) verlaufen durch eine von der Trageinrichtung (41) aufgespannte Ebene hindurch und münden im Bereich eines Anschlußblockes (60) des Sockels (42) in Versorgungsanschlüsse (61,62) ein, die beispielsweise über Schläuche oder Rohre mit einem Temperiergerät verbunden werden können.

Im Bereich seiner dem Verteilersockel (46) abgewandten Ausdehnung grenzt das Primärsegment (48) an ein Sekundärsegment (63), das einen zweiten Verteilerkreis für Flüssigkeiten bereitstellt und das eine Mehrzahl von Vorlaufanschlüssen (64) sowie Rücklaufanschlüssen (65) aufweist.

Die Anschlüsse (64,65) erstrecken sich vorzugsweise relativ zur Verteilerlängsachse (47) in einer radialen Richtung und sind im Bereich eines Außenmantels (66) des Sekundärsegmentes (63) angeordnet.

Die Anschlüsse (64,65) münden jeweils in Verteilerringkammern (67,68) ein, die radial zu Sockelringkammern (69,70) angeordnet sind. Die Sockelringkammern (69,70) münden in Verbindungskanäle (71,72) des Sockels (42) ein, die beispielsweise durch rohrförmige Wandungen (73,74) und den Sockelfuß (44) begrenzt sein können. Die Verbindungskanäle (71,72) verlaufen durch eine von der Trageinrichtung (41) aufgespannte Ebene hindurch und münden im Bereich eines Anschlußblockes (60) des Sockels (42) in Versorgungsanschlüsse (75,76) ein, die beispielsweise über Schläuche oder Rohre mit einem Temperiergerät verbunden werden können.

Eine Halterung des Sockelfußes (48) im Bereich der Trageinrichtung (41) kann beispielsweise über eine Grundplatte (77) erfolgen. Eine weitere Lagerung der ersten Verteileinrichtung (43) erfolgt außenseitig zu einem Sockelkopf (78), der dem Sockelfuß (44) gegenüber abgewandt angeordnet ist und der außenseitig ein Lager (79) trägt, das einen Verteilerkopf (80) rotationsfähig führt. Das Lager (79) kann als ein Kugellager ausgebildet sein. Zur Unterstützung einer Montage und einer Demontage des Verteilers ist im Bereich des Sockelkopfes (78) eine Anschlagöse (81) angeordnet, in die beispielsweise eine Hubeinrichtung oder ein Hallenkran eingreifen kann.

Zur Gewährleistung einer ausreichenden Abdichtung werden zwischen der ersten Verteileinrichtung (43) und dem Sockel (42) Dichtungen (82) angeordnet, die typischerweise als Ringdichtungen realisiert und konzentrisch zur Verteilerlängsachse (47) angeordnet sind.

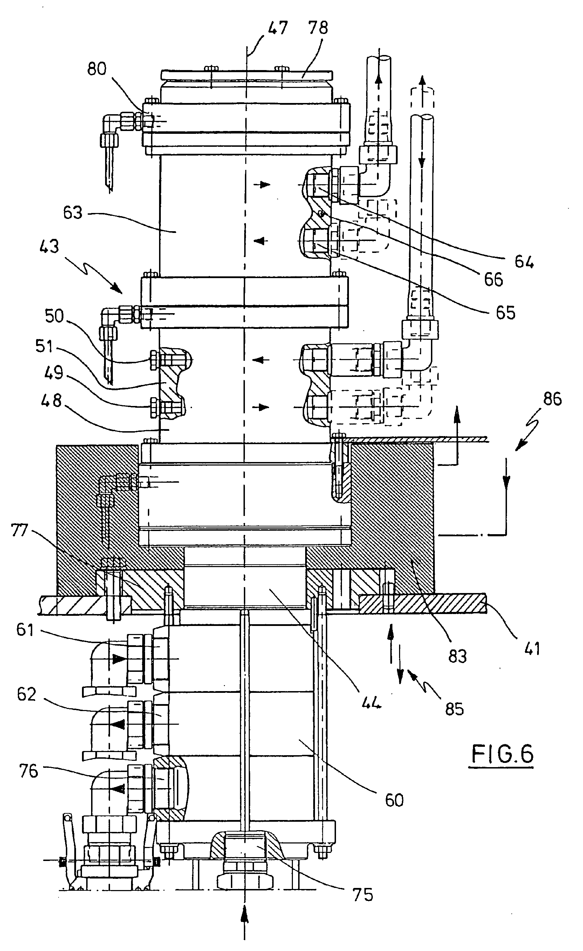

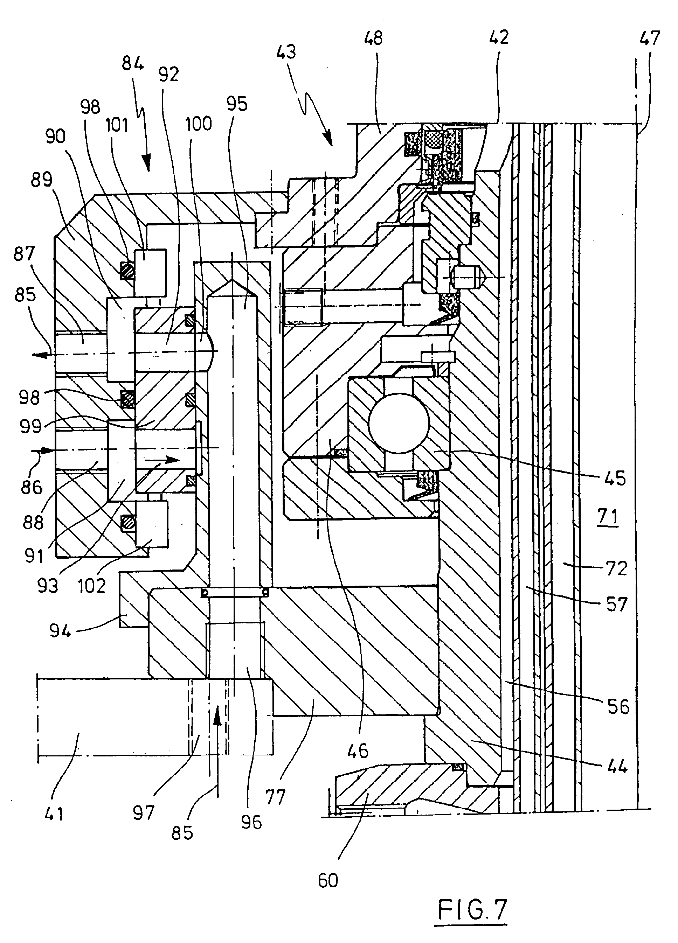

Fig. 6 zeigt eine teilweise geschnittene Seitenansicht einer Vorrichtung, die ähnlich wie die Vorrichtung in Fig. 5 konstruiert ist. In Fig. 6 ist zusätzlich zu den Segmenten (48,63) der ersten Verteileinrichtung (43) ein Installationsbereich (83) für eine in Fig. 7 dargestellte zweite Verteileinrichtung (84) eingezeichnet. Der Installationsbereich (83) umgibt mindestens zu einem Teil außenseitig den Verteilersockel (46) sowie den Sockelfuß (44).

Zur besseren Veranschaulichung'der Einbausituation sind im Bereich der Versorgungsanschlüsse (61,62,75,76) Anschlußflansche für Versorgungsleitungen eingezeichnet. Ebenfalls sind im Bereich der Anschlüsse (49,50,64,65) der ersten Verteileinrichtung (43) Anschlußflansche sowie Verbindungsleitungen eingezeichnet. Durch die Strömungspfeile (85) wird in Fig. 6 veranschaulicht, wie eine Zuführung und eine Ableitung des zu verteilenden Mediums in den Installationsbereich (83) erfolgen kann. Die entsprechenden Anschlußleitungen werden vorzugsweise wieder bei der dargestellten räumlichen Orientierung unterhalb der Grundplatte (77) und somit auf einem Höhenniveau des Anschlußblockes (60) durchgeführt. Durch die Strömungspfeile (86) wird die Abgabe und die Rückführung des zu verteilenden Mediums im Bereich der den zu temperierenden Elementen zugewandten Anschlüssen veranschaulicht.

Fig. 7 zeigt in einer schematischen Querschnittdarstellung die Anordnung der zweiten Verteileinrichtung (84) für ein erstes Ausführungsbeispiel. Es ist zu erkennen, daß die zweite Verteileinrichtung (84) mechanisch mit der ersten Verteileinrichtung (43) verbunden ist. Hierdurch ist sichergestellt, daß bei einer Rotation der ersten Verteileinrichtung (43) relativ zum Sockel (42) eine gleichartige Rotation der zweiten Verteileinrichtung (84) erfolgt. Durch die mechanische Kopplung der ersten Verteileinrichtung (43) und der zweiten Verteileinrichtung (84) werden separate Lager für die zweite Verteileinrichtung (84) vermieden. Dies trägt zu einer kostengünstigen Realisierung bei.

Die zweite Verteileinrichtung (84) weist Vorlaufanschlüsse (87) und Rücklaufanschlüsse (88) auf, um die Verteilung eines flüssigen Mediums für einen weiteren Flüssigkeitskreis zu unterstützen. Die Anschlüsse (87,88) sind im Bereich eines Außenmantels (89) der zweiten Verteileinrichtung (84) angeordnet. Die Anschlüsse (87,88) münden in Verteilerringkammern (90,91) ein, zu denen korrespondierend und bezüglich der Verteilerlängsachse (47) in radialer Richtung innenseitig Statorkammern (92,93) eines Grundelementes (94) angeordnet sind. Das Grundelement (94) ist mechanisch starr mit der Trageinrichtung (41) verbunden. Bei der dargestellten Ausführungsform erfolgt dies über die Grundplatte (77). Innerhalb des Grundelementes (94) erstrecken sich Verbindungskanäle (95), um eine Zuführung und Ableitung des zu verteilenden Mediums zu ermöglichen. Als Verlängerung der Verbindungskanäle (95) sind im Bereich der Grundplatte (77) beziehungsweise der Trageinrichtung (41) Durchgangsausnehmungen (96,97) angeordnet. Über Dichtungen (98) erfolgt eine Abdichtung der zweiten Verteileinrichtung (84) relativ zum Grundelement (94) sowohl in radialer als auch in axialer Richtung. Ebenfalls sind die Verteilerkammern (90,91) relativ zueinander abgedichtet.

Bei der in Fig. 7 dargestellten Ausführungsform ist das Grundelement (94) zur Vereinfachung der Fertigung zweiteilig ausgebildet und weist im Bereich seiner den Verteilerkammern (90,91) zugewandten Ausdehnung einen ringförmigen Kammerträger (99) auf, der zentrisch relativ zur Verteilerlängsachse (57) angeordnet ist und in dessen Bereich die Statorkammern (92,93) angeordnet sind. Die Statorkammern (92,93) sind über Durchgangsausnehmungen (100) mit jeweils zugeordneten Verbindungskanälen (95) innerhalb des Grundelementes (94) verbunden. Die Verbindungskanäle (95) können sich dabei im wesentlichen mit einer Orientierung wie die Verteilerlängsachse (47) erstrecken, die Durchgangsausnehmungen (100) weisen hingegen eine im wesentlichen radiale Orientierung auf. Diese ermöglicht es, die Verbindungskänäle (95) sowie die Durchgangsausnehmungen (100) als Bohrungen zu realisieren. Bei einer ringförmigen Konstruktion der Verteilerringkammern (90,91) ist es ebenfalls möglich, die Statorkammern (92,93) als Bohrungen zu realisieren.

Eine Abdichtung des Außenmantels (89) der zweiten Verteileinrichtung (84) relativ zum Grundelement (94) kann über Gleitringe (101,102) erfolgen, die abgedichtet oberhalb und unterhalb des Kammerträgers (99) angeordnet sind. Grundsätzlich ist es aber ebenfalls denkbar, eine entsprechende Lagerung und Abdichtung der zweiten Verteileinrichtung (84) relativ zum Grundelement (94) in radialer Richtung außenseitig am Grundelement (94) vorzunehmen.

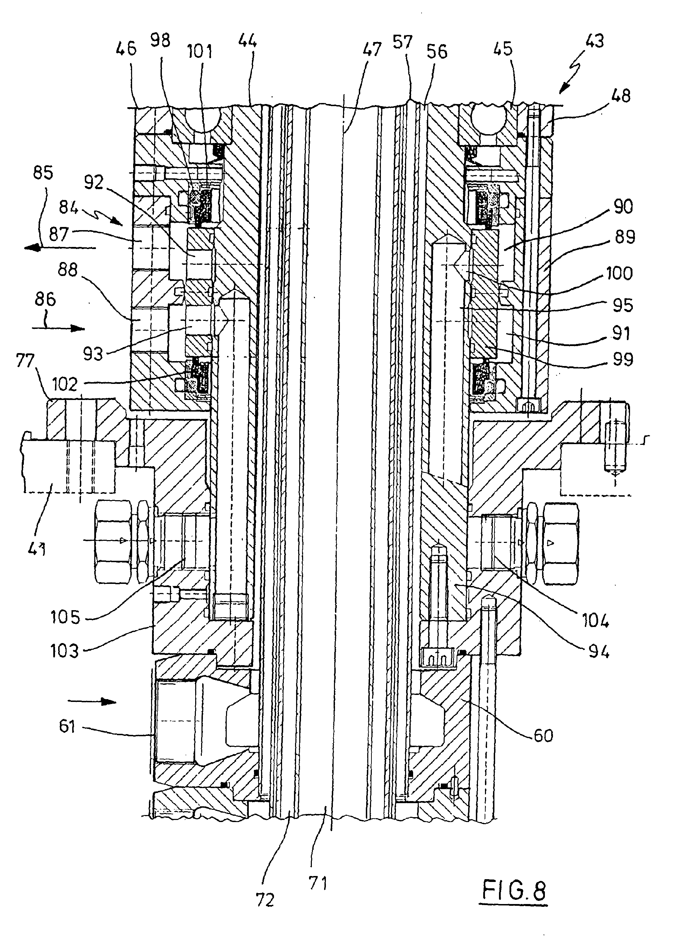

Fig. 8 zeigt ein zweites Ausführungsbeispiel. Bei dieser Ausführungsform ist das Grundelement (94) in den Sockelfuß (44) integriert und wird im wesentlichen dadurch bereitgestellt, daß in den Sockelfuß (44) die erforderlichen Verbindungskanäle (95) eingebracht werden. Darüber hinaus ist gegenüber der Ausführungsform in Fig. 7 das Lager (45) in Richtung der Verteilerlängsachse (47) mit einem größeren Abstand zur Grundplatte (77) angeordnet. Dies ermöglicht es, die zweite Verteileinrichtung (84) derart in dem Freiraum zwischen dem Verteilersockel (46) und der Grundplatte (77) anzuordnen, daß ein Außendurchmesser der zweiten Verteileinrichtung (84) im wesentlichen gleich einem Außendurchmesser der ersten Verteileinrichtung (43) dimensioniert ist. Hierdurch kann die Kompaktheit der Vorrichtung nochmals vergrößert werden.

Aufgrund der Integration des Grundelementes (94) in den Sockelfuß (44) ist die Grundplatte (77) in Richtung ihrer der zweiten Verteileinrichtung (84) abgewandten Ausdehnung mit einem Anschlußflansch (103) versehen, der Versorgungsanschlüsse (104,105) für die zweite Verteileinrichtung (84) trägt, die in die zugehörigen Verbindungskanäle (95) einmünden. Hierdurch wird eine gleiche Zugangsrichtung für alle Versorgungsanschlüsse (61,62,75,76,104,105) bereitgestellt.

## Patentansprüche

1. Vorrichtung zur Verteilung von Flüssigkeiten, die einen von einer Trageinrichtung gehalterten Sockel mit Sockelfluß und mindestens eine relativ zum Sockel drehbeweglich gelagerte erste Verteileinrichtung aufweist, **dadurch gekennzeichnet, daß** eine zweite Verteileinrichtung (84) relativ zu einem starr mit der Trageinrichtung (41) verbundenen Grundelement (94) rotationsfähig gelagert ist, daß die zweite Verteileinrichtung (84) mechanisch mit der ersten Verteileinrichtung (43) gekoppelt ist und daß die zweite Verteileinrichtung (84) den Sockelfuß (44) mindestens bereichsweise im wesentlichen koaxial außenseitig umgibt.

2. Vorrichtung nach Anspruch 1, **dadurch gekennzeichnet, daß** das Grundelement (94) über eine Grundplatte (77) mit dem Sockelfuß (44) verbunden ist.

3. Vorrichtung nach Anspruch 1 oder 2, **dadurch gekennzeichnet, daß** sich innerhalb des Grundelementes (94) Verbindungskanäle (95) für die zu verteilende Flüssigkeit in Richtung einer Verteilerlängsachse (47) erstrecken.

4. Vorrichtung nach einem der Ansprüche 1 bis 3, **dadurch gekennzeichnet, daß** sich im Bereich der zweiten Verteileinrichtung (84) angeordnete Anschlüsse (87,88) für die zu verteilende Flüssigkeit relativ zur Verteilerlängsachse (47) in einer radialen Richtung erstrecken.

5. Vorrichtung nach einem der Ansprüche 1 bis 4, **dadurch gekennzeichnet, daß** sich im Bereich der ersten Verteileinrichtung (43) angeordnete Verbindungskanäle (56,57,71,72) in Richtung der Verteilerlängsachse (47) erstrecken.

6. Vorrichtung nach einem der Ansprüche 1 bis 5, **dadurch gekennzeichnet, daß** sich im Bereich der ersten Verteileinrichtung (43) angeordnete Anschlüsse (49,50,64,65) relativ zur Verteilerlängsachse (47) im wesentlichen in einer radialen Richtung erstrecken.

7. Vorrichtung nach einem der Ansprüche 1 bis 6, **dadurch gekennzeichnet, daß** die erste Verteileinrichtung (43) zur Verteilung eines heißen Mediums ausgebildet ist.

8. Vorrichtung nach einem der Ansprüche 1 bis 7, **dadurch gekennzeichnet, daß** die erste Verteileinrichtung (43) zur Verteilung eines heißen Öles ausgebildet ist.

9. Vorrichtung nach einem der Ansprüche 1 bis 8, **dadurch gekennzeichnet, daß** die zweite Verteileinrichtung (84) zur Verteilung eines kalten Mediums ausgebildet ist.

10. Vorrichtung nach einem der Ansprüche 1 bis 9, **dadurch gekennzeichnet, daß** die zweite Verteileinrichtung (84) zur Verteilung von kaltem Wasser ausgebildet ist.

11. Vorrichtung nach einem der Ansprüche 1 bis 10, **dadurch gekennzeichnet, daß** die erste Verteileinrichtung (43) als ein Zwei-Kreis-Verteiler ausgebildet ist.

12. Vorrichtung nach einem der Ansprüche 1 bis 11, **dadurch gekennzeichnet, daß** die erste Verteileinrichtung (43) gemeinsam mit der zweiten Verteileinrichtung (84) einen Drei-Kreis-Verteiler bereitstellt.

13. Vorrichtung nach einem der Ansprüche 1 bis 12, **dadurch gekennzeichnet, daß** zwischen dem Sockelfuß (44) und dem Grundelement (94) ein Verteilersockel (46) der ersten Verteileinrichtung (43) angeordnet ist.

14. Vorrichtung nach einem der Ansprüche 1 bis 13, **dadurch gekennzeichnet, daß** das Grundelement (94) im Bereich seiner der Verteilerlängsachse (47) abgewandten Ausdehnung mit einem Kammerträger (99) versehen ist.

15. Vorrichtung nach einem der Ansprüche 1 bis 14, **dadurch gekennzeichnet, daß** der Kammerträger (99) als Dichtflächenträger für Gleitringdichtungen (101,102) der zweiten Verteileinrichtung (84) ausgebildet ist.

16. Vorrichtung nach einem der Ansprüche 1 bis 15, **dadurch gekennzeichnet, daß** die erste Verteileinrichtung (43) und die zweite Verteileinrichtung (84) im Bereich eines rotierenden Blasrades (25) angeordnet sind.

17. Vorrichtung nach einem der Ansprüche 1 bis 16, **dadurch gekennzeichnet, daß** die Anschlüsse (49,50,64,65,86,87) der Verteileinrichtungen (43,84) mit Blasstationen (3) verbunden sind, die im Bereich des rotierenden Blasrades (25) angeordnet sind.

18. Vorrichtung nach einem der Ansprüche 1 bis 17, **dadurch gekennzeichnet, daß** die Blasstationen (3) zur Herstellung von Behältern (2) mit einer Konturstabilität bei einer Einwirkung einer Temperatur von mindestens 70° C ausgebildet sind.

19. Vorrichtung nach einem der Ansprüche 1 bis 18, **dadurch gekennzeichnet, daß** das Grundelement (94) und der Sockelfuß (44) ein gemeinsames Bauteil ausbilden.

20. Vorrichtung nach Anspruch 19, **dadurch gekennzeichnet, daß** die Verbindungskanäle (95) des Grundelementes (94) innerhalb des Sockelfußes (44) angeordnet sind.

21. Vorrichtung nach einem der Ansprüche 1 bis 20, **dadurch gekennzeichnet, daß** das Lager (45) der ersten Verteileinrichtung (43) in Richtung der Verteilerlängsachse (47) zwischen der ersten Verteileinrichtung (43) und der zweiten Verteileinrichtung (84) angeordnet ist.

22. Vorrichtung nach einem der Ansprüche 1 bis 21, **dadurch gekennzeichnet, daß** die erste Verteileinrichtung (43) und die zweite Verteileinrichtung (84) im wesentlichen gleich dimensionierte Außendurchmesser aufweisen.

23. Vorrichtung nach einem der Ansprüche 1 bis 22, **dadurch gekennzeichnet, daß** die Grundplatte (77) einen Anschlußflansch (103) aufweist, der sich in eine der zweiten Verteileinrichtung (84) abgewandte Richtung erstreckt.

24. Vorrichtung nach Anspruch 23, **dadurch gekennzeichnet, daß** der Anschlußflansch (103) Versorgungsanschlüsse (304,105) trägt, die in die Verbindungskanäle (95) einmünden.
